# EUROPÄISCHE PATENTSCHRIFT

(11) **EP 2 129 569 B1**
(45) Veröffentlichungstag und Bekanntmachung des Hinweises auf die Patenterteilung: **25.08.2010**
(21) Anmeldenummer: 08716191.5
(22) Anmeldetag: 03.03.2008
(51) Int. Cl.: B62D 15/02, B62D 13/06, B60R 1/00, B60Q 1/48, G05D 1/02, G06T 7/20, H04N 7/18

(54) **RANGIERHILFE UND VERFAHREN ZUR FAHRERUNTERSTÜTZUNG BEIM RANGIEREN VON FAHRZEUGEN BZW. FAHRZEUGGESPANNEN, DIE AUS GEGENEINANDER KNICKBAREN FAHRZEUGELEMENTEN BESTEHEN**
MANEUVERING AID AND METHOD FOR AIDING DRIVERS OF VEHICLES OR VEHICLE COMBINATIONS COMPRISING VEHICLE ELEMENTS BENDABLE RELATIVE TO ONE ANOTHER
AIDE ET PROCÉDÉ POUR SE GARER, POUR DES CONDUCTEURS DE VÉHICULES OU DE TRAINS ROUTIERS CONSTITUÉS DE VÉHICULES ARTICULÉS LES UNS PAR RAPPORT AUX AUTRES

(30) Priorität: 06.03.2007 DE 102007011180
(43) Veröffentlichungstag der Anmeldung: 09.12.2009
(73) Patentinhaber: Daimler AG, 70327 Stuttgart (DE)
(72) Erfinder: HAHN, Stefan, 89075 Ulm (DE)
(74) Vertreter: Moore, David Simon
(86) Internationale Anmeldenummer: PCT/EP2008/001671
(87) Internationale Veröffentlichungsnummer: WO 2008/107148

(56) Entgegenhaltungen:
- WO-A-2008/012109
- DE-A1-102005 045 196
- GB-A- 2 398 048
- US-A1- 2005 128 294
- Z BEL D: "Mathematical Modeling of the Kinematics of Vehicles" INTERNET CITATION, [Online] XP009090696 Gefunden im Internet: URL:http://www.uni-koblenz.de/~zoebel/pdf/ Mamotep2.pdf> [gefunden am 2007-10-10]

## Beschreibung

Die Erfindung betrifft eine Rangierhilfe für Fahrzeuge und Fahrzeuggespanne, welche gegeneinander bewegliche Teilabschnitte aufweisen, gemäß dem Oberbegriff des Anspruchs 1 sowie ein entsprechendes Verfahren.

Beim Führen eines Fahrzeuges ist es zur Vermeidung von Unfällen notwendig, dass der Fahrzeugführer das Umfeld des Fahrzeuges möglichst optimal einsehen kann. Die Erfassung des Fahrzeugumfeldes erfolgt dabei im Wesentlichen durch Sichtprüfung durch den Fahrzeugführer. Insbesondere beim Rangieren eines Fahrzeuges stellt sich auf Grund der Sitzposition des Fahrers jedoch das Problem, dass ein großer Teil des einzusehenden Fahrzeugrückraums durch den Fahrzeugkörper selbst verdeckt wird. Zur Lösung dieses Problems sind unterschiedlichste Spiegel- und Linsenkonstruktionen zur Anbringung am Fahrzeug bekannt. Auch wird neuerdings vorgeschlagen, den Rückraum des Fahrzeuges mit Hilfe einer Kameraeinrichtung zu erfassen und die so gewonnenen Bilddaten dem Fahrzeugführer gut einsehbar auf einem Display in Armaturenbereich darzustellen.

Um den Fahrzeugführer neben der Kamerabildanzeige bei der Rückwärtsfahrt weiter zu unterstützen wird in den Schriftten EP 1 022 903 A2 und EP 1 102 226 B1 eine Rangierhilfe für Kraftfahrzeuge insbesondere zur Einfahrt in Parklücken vorgeschlagen. Hierzu wird dem Fahrzeugführer auf einer Anzeige ein Kamerabild des rückwärtigen Raums präsentiert, auf welchem überlagert, ausgehend von dem erfassten Lenkwinkel des Fahrzeuges der prädizierte Fahrweg dargestellt wird.
Die gattungsbildende Druckschrift GB 2 398 048 beschreibt ein Steuerungshilfssystem für ein Fahrzeug. Das Steuerungshilfssystem umfasst eine Umgebungskamera und ein Benutzerinterface, wobei dem Benutzer bei der Rückwärtsfahrt Hinweise zum Steuern des Fahrzeugs auf dem Benutzerinterface eingeblendet werden.

Aufgabe der Erfindung ist es eine verbesserte Rangierhilfe zu schaffen, welche für ein breites Spektrum von Kraftfahrzeugen verwendbar ist.

Die Aufgabe wird durch eine Vorrichtung und ein Verfahren mit den Merkmalen der Patentansprüche 1 und 15 gelöst. Vorteilhafte Ausgestaltungen und Weiterbildungen der Erfindung werden durch die Unteransprüche beschrieben.

Das System zur Fahrerunterstützung beim Rangieren ist so ausgelegt, dass es sich auch zum Führen eines Fahrzeuges bzw. Fahrzeuggespanns (1) eignet, bei welchem dieses Gefährt aus mehreren gegeneinander knickbaren Fahrzeugelementen (2,3) besteht. Hierzu wird mittels einer Kamera die rückwärtige Umgebung des Gefährts (1) erfasst.

Einer oder mehrere Sensoren sind angeordnet und/oder ausgebildet, den Anordnungszustand des Gefährts und/oder der Fahrzeugelemente., insbesondere die relative Lage der Fahrzeugelemente zueinander und die Rädereinstellung zu erfassen. Beispielsweise wird zur Erfassung des Lenkwinkels (7) wenigstens einer lenkbaren Achse (6) des Gefährts (1), sowie zur Ermittlung des Knickwinkels (5) zwischen wenigstens zwei gegeneinander knickbaren Fahrzeugelementen (2,3) Sensoren eingesetzt. Bei diesen Sensoren kann es sich sehr wohl um mechanische bzw. elektromechanische Sensoren handeln. Alternativ ist es auch möglich, die Zustände der Knickwinkel über ein internes Modell oder einen regelungstechnischen Beobachter abzuschätzen. Sehr wohl ist aber auch denkbar, dass der Sensor zur Erfassung des Knickwinkels (5) zwischen wenigstens zwei Fahrzeugelementen oder des Lenkwinkels (7), auf einem umgebungserfassenden Sensor, insbesondere einer Kamera oder einem Radar/Lidar, basiert, und der aktuelle Knickwinkel (5) bzw. Lenkwinkel (7) ausgehend von den damit erfassten Umgebungsdaten geschätzt wird; so wäre es sehr wohl denkbar eines von zwei gegeneinander knickbaren Fahrzeugelementen (2,3) mit einer Kamera zu versehen und aus den damit erfassten Bilddaten des anderen Fahrzeugelementes den Knickwinkel zu bestimmen (analog könnte hierzu bei der Verwendung eines Radar- oder Lidar-Systems vorgegangen werden).

Die mit der Kamera erfassten Bilddaten, sowie die ermittelten Anordnungszustände, insbesondere die Lenk- und Knickwinkel werden einem Prozessormodul zugeführt. Dieses Prozessormodul besteht zumindest aus einer Einheit zur Bilddatenverarbeitung, sowie wenigstens einem Speicher, welcher die Abmaße der Geometrie, insbesondere die Umfangsgeometrie (1) des Gefährts (1) beinhaltet.

Selbstverständlich ist es für die Vorrichtung beim Rangieren vorteilhaft, wenn alle Lenk- und/oder Knickwinkel (5,7) des Gefährts (1) erfasst und im Prozessormodul verarbeitet werden. Gleichsam ist es aber sehr wohl auch denkbar nur die besonders stark variierenden Lenk- und/oder Knickwinkel zu erfassen und zu berücksichtigen. Auch in einer derartig beschränkten Ausgestaltung der Erfindung kann im allgemeinen eine noch passabler für kurze Distanzen akzeptable Prädiktion des Fahrverlaufes erfolgen.

Erfindungsgemäß wird ein Bestimmungsmodul als Teil des Prozessormoduls vorgeschlagen, welches zur Bestimmung eines rektifizierbaren Zustands des Gefährts, vorzugsweise unter Verwendung der erfassten Anordnungszustände und/oder der Abmaße der Geometrie des Gefährts, für eine aktuelle Position und/oder für mindestens eine prognostizierte Position des Gefährts ausgebildet ist. Ein rektifizierbarer Zustand ist als ein Zustand definiert, aus dem das Gefährt innerhalb einer Fahrstrecke von z. B. weniger als vier, drei oder zwei Gefährtlängen gerade ausgerichtet werden kann. Bevorzugt wird der rektifizierbare Zustand als eine Kombination von Anordnungszuständen, insbesondere als eine Kombination von Knick- und Deichselwinkeln definiert.

Der Erfindung liegt dabei die Überlegung zugrunde, dass bei üblichen Rangierhilfen die Fahrzeuge oftmals in Anordnungszustände führen, aus denen - insbesondere bei einer Rückwärtsfahrt - ein Geraderichten des Gefährts nicht oder nicht innerhalb vertretbarer Fahrstrecken möglich ist. Bei den üblichen Systemen besteht somit die Gefahr, dass die Gefährte ir "Einbahnsituationen" gelotst werden, aus denen die Gefährte nur mit einer Vorwärtsfahrt entkommen können. Eine Verbesserung der Erfindung ist darin zu sehen, dass die Vorrichtung kontrolliert, ob sich das Gefährt in einer derartigen "Einbahnsituation befindet und/oder in einer prognostizierten Position des Gefährts befinden wird.

In besonders vorteilhafter Weise wird der Speicher, welche die geometrischen Abmaße des Gefährts (1) enthält so ausgelegt, dass darin gleichzeitig mehrere unterschiedliche Fahrzeuggeometrien gespeichert werden können. Auf diese Weise wird es besonders leicht möglich das System zur Fahrerunterstützung beim Rangieren an Veränderungen der Fahrzeuggeometrien (z.B. neuer Anhänger, andere Aufbauten usw.) anzupassen. Solche Änderungen lassen sich ohne großen technischen Aufwand in das System übernehmen, indem beispielsweise die entsprechenden Daten der neuen Abmaße in den Speicher der (mobilen und/oder stationären) Datenverarbeitungsanlage eingegeben werden. Bei entsprechender Ausführung kann dies insbesondere auch drahtlos erfolgen. Im Falle sich häufiger wiederholender (gleicher) Änderungen (z.B. Fahrt mit aufgeladenen, bzw. abgeladenen Container) können auch mehrere unterschiedliche Fahrzeugkonturen oder -abmaße im Speicher der Datenverarbeitungsanlage enthalten sein und gegebenenfalls auch manuell abgerufen werden.

Um dem Fahrzeugführer eine möglichst umfassende Einsicht in die rückwärtige Umgebung präsentieren zu können bietet sich die Verwendung einer omnidirektionalen (kathadioptische)Kamera an. Hierdurch kann die Anzahl der zur Rückraumüberwachung notwendigen Kameras minimiert werden.

Vorzugsweise wird anhand der Daten über den Anordnungszustand, insbesondere der Lenk- und Knickwinkel (5,7), und in Kenntnis wenigstens der Geometrie des Gefährts (1), im Prozessormodul der künftige Fahrverlauf des Gefährts (1) im Umfang dessen Fahrspur (21,31,32) und/oder dessen Schleppspur (22,33,34) prognostiziert und perspektivisch richtig, symbolisch den durch die Kamera aufgenommenen Bilddaten überlagert. Im Anschluss daran werden die so bearbeiteten Bilddaten auf einer Anzeige dem Fahrer des Gefährts (1) zur Rangierhilfe angezeigt.

Zur Anzeige der mit den Daten der Fahrspur (21,31,32) und/oder Schleppspur (22,33,34) überlagerten Bilddaten eignen sich insbesondere im Bereich des Armaturenbrettes befindliche Displays oder aber auch Head-up Displays, bei welchen die darzustellenden Bilddaten auf im Fahrzeug vorhandene Flächen, insbesondere die Windschutzscheibe, projiziert werden. Gleichwohl bietet sich aber auch die Integration der Bildanzeige in einen oder in den Bereich eines Rückspiegels des Gefährts (1) an. Dies bietet den Vorteil, dass die Bildanzeige an Orten erfolgt, welche regelmäßig durch den Fahrzeugführer bei der Fahrt des Gefährts (1) ohnehin eingesehen werden müssen; eine Kombination von Rückspiegel und Kamerabildanzeige führt somit zu einer ergonomischen Verbesserung der Rangierunterstützung.

Bei einer bevorzugten Ausführungsform der Erfindung werden Hinweise auf den rektifizierbaren Zustand des Gefährts für die aktuelle Position und/oder für die prognostizierte Position auf der Anzeigeeinheit dargestellt. Der Hinweis kann z.B. als Farbänderung in der Anzeigeeinheit verkörpert sein. Dieser Hinweis kann beispielsweise auch durch eine Warneinrichtung erfolgen, welche ein optisches, akustisches oder haptisches Warnsignal ausgibt, wenn das Gefährt in der aktuellen und/oder in der prognostizierten Position des Gefährts sich in einem nicht-rektifizierbaren Zustand befindet.

Bei einer bevorzugten Weiterbildung der Erfindung wird der zukünftige Fahrverlauf des Gefährts unter Berücksichtigung und/oder Gewichtung des oder der rektifizierbaren Zustände prognostiziert. Insbesondere werden Fahrverläufe, die entlang Trajektorien mit Positionen rektifizierbarer Zustände verlaufen, bei der Prognose, z.B. über eine Bewertungsfunktion, bevorzugt. Bei dieser Weiterbildung wird insbesondere berücksichtigt, dass die prognostizierten Fahrverläufe sehr empfindlich gegen kleine Änderungen des Lenkwinkels sind, so dass durch Berücksichtigung der rektifizierbaren Zustände stabilere Ergebnisse bzw. Prognosen erzeugt werden können. Zudem sind über die Prognose die tatsächlichen Knick- und Deichselwinkel nicht oder nur schwer abschätzbar.

Bei einer weiteren Ausführungsform der Erfindung ist die Darstellung auf der Anzeigeeinheit verbessert, indem ein erster Fahrverlaufsabschnitt dargestellt wird, welcher unter Verwendung des aktuellen Lenkwinkels prognostiziert und/oder extrapoliert wurde und nur soweit dargestellt wird, solange dieser deckungsgleich mit einer Trajektorie mit Positionen rektifizierbarer Zustände bei diesem Lenkwinkel ist.

Bei einer Weiterbildung der Erfindung wird der Endpunkt des ersten Fahrverlaufsabschnitts als Abweichpunkt definiert und beschreibt die Position des Gefährts, an der das Gefährt bei konstant gehaltenem Lenkwinkel die Trajektorie mit Positionen rektifizierbarer Zustände verlässt und/oder in einen nicht-rektifizierbaren Zustand übergeht. An diesem Abweichpunkt wird mindestens ein zweiter Fahrverlaufsabschnitt datentechnisch angesetzt und auf der Anzeigeeinheit dargestellt, wobei dieser zweite Fahrverlaufsabschnitt für optimierten Lenkwinkel prognostiziert ist.

Insbesondere verläuft der zweite Fahrverlaufsabschnitt entlang einer Trajektorie von rektifizierbaren Positionen für den optimierten Lenkwinkel. Die Wahl des optimierten Lenkwinkels kann dabei so ausgebildet sein, dass der zweite Fahrverlaufsabschnitt an der Grenze eines Felds von rektifizierbaren Zuständen für alle möglichen Lenkwinkel gelegt ist.

Bei einer Weiterbildung der Erfindung wird eine Schar von zweiten Fahrverlaufsabschnitten an dem Abweichpunkt datentechnisch angesetzt und auf der Anzeigeeinheit dargestellt, wobei diese zweiten Fahrverlaufsabschnitte für verschiedene Lenkwinkel prognostiziert sind. Auf diese Weise werden dem Fahrer des Gefährts verschiedene Optionen für die Fahrt nach dem Abweichpunkt vorgeschlagen.

Nachfolgend wird das erfindungsgemäße System im Detail mit Hilfe von Figuren beschrieben. Dabei zeigt
- Figur 1: den schematischen Aufbau des Systems am Beispiel eines Gelenkbusses,
- Figur 2: eine beispielhafte Darstellung des Fahrverlaufs,
- Figur 3: eine Variante des in Figur 2 dargestellten Fahrverlaufs.
- Figur 4: eine weitere Variante für die Darstellung eines Fahrverlaufs.

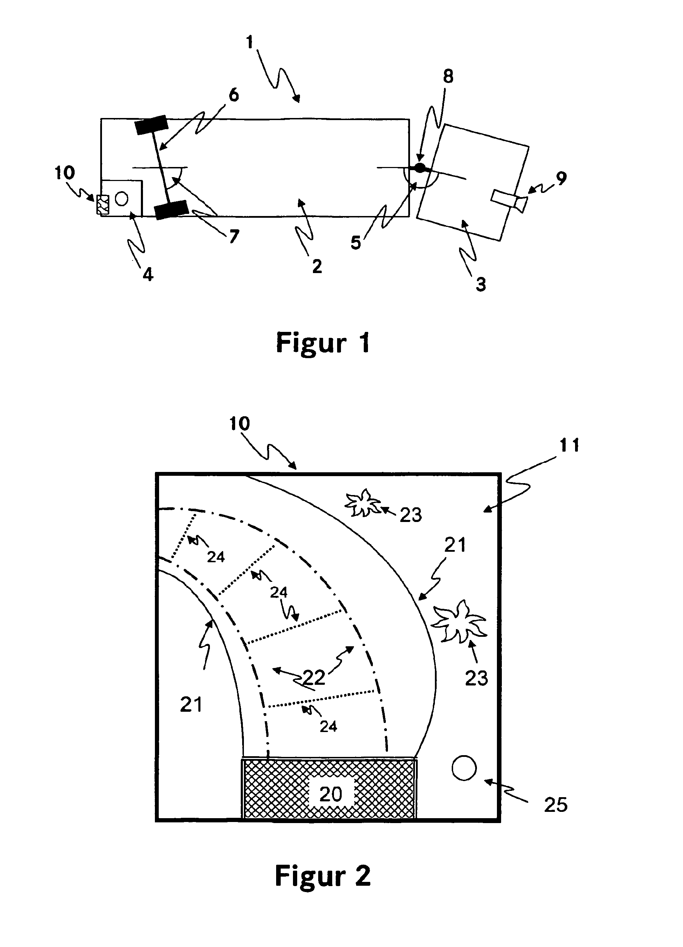

Figur 1 zeigt schematisch einen Gelenkbus (1) bestehend aus zwei gegeneinander knickbarer Fahrzeugelemente (2,3); nicht dargestellt ist die flexible Außenwandverbindung ('Ziehharmonika') der Fahrzeugelemente. In dem größeren Fahrzeugelement (2) findet sich auch der Fahrersitzplatz (4) mit einer Bildanzeige (10). Die beiden Fahrzeugelemente (2,3) sind durch ein Gelenk (8) miteinander gekoppelt. Führt ein Fahrzeugführer während der Fahrt des Gelenkbusses (1) eine Lenkbewegung durch führt dies zu einer am Gelenk (8) messbaren Veränderung des Knickwinkels (5). Der aus der Lenkbewegung resultierende Lenkwinkel (7) an der lenkbaren Achse (6) des Gelenkbusses (1) lässt sich über geeignete Mittel erfassen u gemeinsam mit dem Knickwinkel (5) und den Bilddaten der Kamera (9) der Prozessoreinheit des Systems zur Fahrerunterstützung zuführen.

Die Figur 2 zeigt beispielhaft ein im Prozessormodul bearbeitete Kamerabild (11) auf der Bildanzeige (10. Das Kamerabild (11) umfasst insbesondere einen Teil (20) des Gefährts, sowie die Umrisslinien (21) der Schleppspur und die Fahrspuren (22) zweier Räder. Zusätzlich finden sich im Kamerabild (11) zwei Objekte (23), beispielsweise Pflanzen, abgebildet. In einer besonders vorteilhaften Ausgestaltung der Erfindung umfasst das Prozessormodul auch noch Mittel zur Klassifikation von in den Bilddaten abgebildeten Objekten, wobei diese besonders gewinnbringend durch die Klassifikationseinheit zusätzlich in ihrer Position und Geometrie bestimmt und hinsichtlich ihrer Überfahrbarkeit überprüfte werden sollten; überfahrbar sind beispielsweise Schachtdeckel oder niedrige Bordsteine, während Pflanzen oder signifikant erhabene Strukturen (Mauern) nicht überfahren werden können. In einer besonders vorteilhaften Ausgestaltung der Erfindung werden im Rahmen der Darstellung der Schleppspur (21) bzw. einer Fahrspur (22) eine oder mehrer Distanzlinien (24) dargestellt, welche den Fahrer bei der Abschätzung von Entfernungen aus der Bilddarstellung unterstützen. Der Abstand zwischen den Distanzlinien (24) in Bezug auf das reale Umfeld wird bevorzugt mit gleichem Abstand gewählt. Dabei ist es denkbar wie in Figur 2 gezeigt, die Distanzlinien (24) über den gesamten dargestellten prädizierten Spurverlauf anzuzeigen, oder aber die Anzeige auf eine bestimmte Entfernung hin zu beschränken. Hierzu wäre es denkbar, die Beschränkung und die Anzahl von dargestellten Distanzlinien (24) geschwindigkeitsabhängig zu wählen, insbesondere der Gestalt, dass bei geringeren Geschwindigkeiten die Anzeige auf eine geringere Entfernung beschränkt wird. Gewinnbringend wäre es auch denkbar, unabhängig von der mittels der Distanzlinien (24) verbessert sichtbar gemachten Entfernung die Anzahl der dargestellten Distanzlinien konstant zu halten. Eine Warnanzeige (25) gibt für den Fahrer ein Warnsignal aus, sobald das Gefährt (20) in einen nicht-rektifizierbaren Zustand gefahren wird. Ein nicht-rektifizierbarer Zustand ist ein Anordnungszustand des Gefährts (20), aus dem das Gefährt während der Rückwärtsfahrt nicht innerhalb einer Strecke von zwei Fahrzeuglängen geradegerichtet werden kann. Geradegerichtet bedeutet hier einen 180° Knickwinkel (5) gemäß Figur 1.

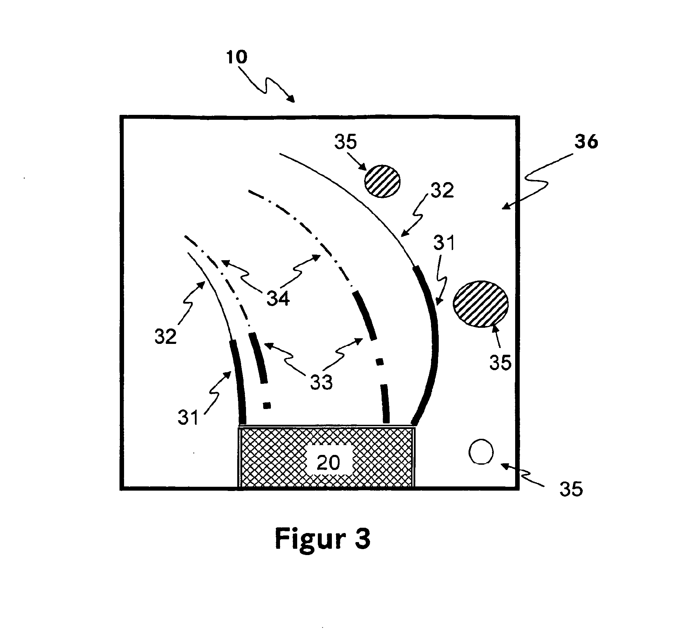

Figur 3 zeigt eine Variante zu der in Figur 2 dargestellten Darstellung der im Prozessormodul bearbeiteten Bilddaten. Die gemäß Figur 3 auf der Bildanzeige (10) dargestellten Bilddaten (36) enthalten ebenso einen Teil (20) des Gefährts, sowie die Umrisslinien (21) der Schleppspur und die Fahrspuren (22) zweier Räder. Im Unterschied zu Figur 2 wurden hierbei jedoch die Umrisslinien (21) und die Fahrspuren (22) nicht bis an den Rand des Anzeigefeldes der Bildanzeige (10) geführt, sondern wurden auf einen bestimmten Entfernungsbereich beschränkt. Insbesondere bietet sich eine Beschränkung auf einen Teilbereich an, innerhalb welchem eine Prädiktion der anzuzeigenden Spuren noch sinnvoll erfolgen kann, bzw. innerhalb welches die Prädiktion noch innerhalb einer bestimmten Streuungsbandbreite liegt; hierbei ist besonders beachtlich, dass sich die zu beobachtenden Knickwinkel zwischen Fahrzeugelementen (2,3) bei Gelenkfahrzeugen (1) bereits innerhalb einer kurzen Rangierstrecke starken Variationen unterliegen.

Zudem erfolgt bei dem in der Figur 3 dargestellten Beispiel die Anzeige von Fahrspur (21, 31, 32) und/oder Schleppspur 22,33,34) gestuft in unterschiedlichen Gestaltungsvarianten (31,32 bzw. 33,34). Neben einer derartigen unterschiedlichen Liniengestaltung ist es selbstverständlich auch möglich unterschiedliche Farbgestaltungen zu verwenden. Auf diese Weise können einfach und eingänglich insbesondere unterschiedliche Entfernungsbereiche herausgestellt werden; auch wäre es denkbar, so Stufen unterschiedlicher Streuungsbandbreiten der Prädiktion herauszustellen. Auch in der Figur 3 ist eine Warnanzeige (35) angeordnet, die dem Fahrer analog zu der Warnanzeige (25) in Figur 1 Hinweise auf nichtrektifizierbare Zustände des Gefährts (20) gibt.

Die noch in den Bilddaten (11) gegenständlich dargestellten Objekte im Rückraum des Gefährts (1) wurden in den Bilddaten (36) durch Symbole (schraffierte Kreise) überlagert. Auf diese Weise wird der Fahrer vor Objekten gewarnt ohne aber durch unnötige Detailinformation abgelenkt zu sein. Wäre eines der Objekte als überfahrbar klassifiziert worden, so wäre es auch denkbar dieses Objekt durch geeignete Bildverarbeitung aus den Bilddaten zu 'entfernen', um so die Darstellung von 'irrelevanten' Objekten zu befreien.

Bei den in den Figuren 2 und 3 dargestellten Beispielen wurden die Fahrspuren (21, 31, 32) von nur zwei Rädern eingezeichnet. Gleichsam ist es auch denkbar die Fahrspuren aller Räder des Gefährts (1) anzuzeigen. In einer anderen Ausgestaltung der Erfindung könnte besonders vorteilhaft zur besseren Übersichtlichkeit der Darstellung nur diejenigen Fahrspuren (21,31,32) der Räder angezeigt werden, welche senkrecht zum aktuell prognostizierten Fahrverlauf am weitesten beabstandet sind. Eine derartige Darstellung würde einen sicheren Fahrverlauf bereits auch dann sicherstellen, wenn im Verlauf des Rangierens die Fahrspur eines der Räder aus dem Bereich der Schleppspur hinauslaufen würde. Auch wäre es in einer vorteilhaften Ausgestaltung der Erfindung denkbar ergänzend oder alternativ den prognostizierten Bewegungsverlauf einer oder mehreren Ecken des Gefährts darzustellen.

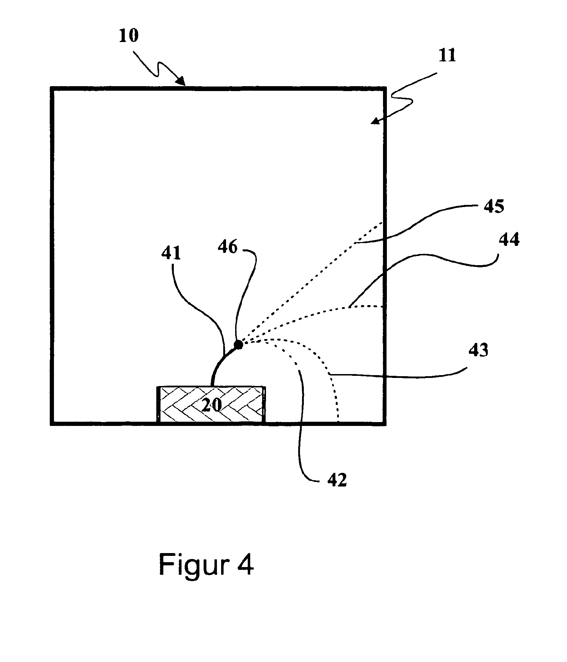

Die Figur 4 zeigt in schematischer Darstellung eine weitere Möglichkeit des im Prozessormodul bearbeiteten Kamerabilds (11) auf der Bildanzeige (10). Das Kamerabild zeigt wieder einen Teil (20) des Gefährts sowie eine Mehrzahl von schematischen Spuren (41), (42), (43), (44) und (45), die bei der praktischen Umsetzung durch die entsprechenden Umrisslinien (21) der Schleppspur und der Fahrspur (22) ersetzt werden können.

Die sich direkt an das Gefährt (20) anschließende Spur (41) ist ein erster Fahrverlaufsabschnitt, welcher auf Basis des Lenkwinkels (7) und des Knickwinkels (5) prognostiziert wurde. Die Spur (41) endet in einem Abweichpunkt (46), wobei der Abweichpunkt dadurch definiert ist, dass bis zu dem Abweichpunkt (46) die Spur (41) auf einer Trajektorie von Positionen mit rektifizierbaren Zuständen des Gefährts (20) verläuft. Der Abweichpunkt (46) stellt damit die Grenze zu einem Bereich mit Positionen nicht-rektifizierbarer Zustände dar. Zur Illustration ist die Spur (41) mit konstanten aktuellen Lenkwinkel (7) in der Figur 4 als Spur (42) gepunktet weitergeführt, wobei die Spur (42) auf einer Trajektorie mit Positionen nicht-rektifizierbarer Zustände des Gefährts (20) verläuft. In einem ersten Betriebsmodus wird von den Spuren (41), (42), (43), (44) und (45) nur die Spur (41) auf der Bildanzeige (10) angezeigt.

In einem zweiten Betriebsmodus wird ergänzend dazu die Spur (43) angezeigt, welche in dem Abweichpunkt (46) beginnt und die Spur (41) fortsetzt. Auch die Spur (43) verläuft auf einer Trajektorie von Positionen rektifizierbarer Zustände, wobei jedoch ein optimierter Lenkwinkel 5 statt des aktuellen Lenkwinkels 5 angenommen wird. Der optimierte Lenkwinkel wird so bestimmt, dass die Spur 43 an der Grenze zwischen Positionen mit rektifizierbaren und nicht-rektifizierbaren Zuständen verläuft, wobei sich die Trajektorie in der Regel asymptotisch einem Kreisbogen nähert. Anders ausgedrückt wird dem Fahrer eine mögliche Spur mit einem optimierten Lenkwinkel vorgeschlagen, die der Spur (42) mit dem ursprünglichen Lenkwinkel am nächsten kommt, jedoch auf einer Trajektorie mit Positionen rektifizierbarer Zustände verläuft. Die Spur (43) endet in einem Bereich, in dem das Gefährt (20) geradegerichtet ist.

In einem dritten Betriebsmodus werden ergänzend weitere Spuren (44), (45) vorgeschlagen, die auf Basis weiterer Lenkwinkel 5 berechnet sind und jeweils auf Trajektorien mit Positionen rektifizierbarer Zustände verlaufen. Hier werden also dem Fahrer weitere Möglichkeiten für Spuren von der Vorrichtung aufgezeigt, bei deren Verfolgung das Gefährt (20) im Endbereich geradegerichtet ist oder werden kann.

Die Erfindung eignet sich gleichsam beim Einsatz mit Traktoren oder anderen Zugfahrzeugen mit einem oder mehreren Anhängern oder aber mit Sattelschleppern oder Gelenkbussen. Die Erfindung ist insbesondere nicht beschränkt auf Fahrzeugkonfigurationen mit nur einem Drehegelenk. So ist z.B. die Anwendung auf einen Gelenkzug möglich, bei dem sowohl der Einschlagwinkel der Anhängerdeichsel als auch der Winkel am Kupplungspunkt des Zugfahrzeugs zur Berechnung der rektifizierten Positionen herangezogen wird.

## Patentansprüche

1. Vorrichtung zur Fahrerunterstützung beim Rangieren eines Fahrzeuges bzw. Fahrzeuggespanns (1) bei einer Rückwärtsfahrt, bei welchem dieses Gefährt aus mehreren gegeneinander knickbaren Fahrzeugelementen (2,3) besteht,
umfassend eine Kamera (9) zum Erfassen von Bilddaten aus der rückwärtigen Umgebung des Gefährts (1), umfassend eine oder mehrere Sensoren zum Erfassen des Anordnungszustands des Gefährts und/oder der Fahrzeugelemente, umfassend ein Prozessormodul, welches mit der Kamera (9), sowie mit dem oder den Sensoren in Verbindung steht, wobei dieses Prozessormodul zumindest aus einer Einheit zur Bilddatenverarbeitung, sowie wenigstens einem Speicher, beinhaltend Abmaße der Geometrie, insbesondere der Umfangsgeometrie, des Gefährts (1), besteht, sowie umfassend eine Anzeigeeinheit (10) zur Anzeige der in dem Prozessormodul bearbeiteten Bilddaten,
wobei das Prozessormodul ein Bestimmungsmodul zur Bestimmung eines rektifizierbaren Zustands des Gefährts für eine aktuelle Position und/oder für mindestens eine prognostizierte Position des Gefährts aufweist, wobei der rektifizierbare Zustand des Gefährts als ein Zustand definiert ist, aus dem das Gefährt während der Rückwärtsfahrt innerhalb einer vorgebbaren Fahrstrecke vorzugsweise von weniger als vier, drei oder zwei Gefährtlängen gerade ausgerichtet werden kann,
**dadurch gekennzeichnet, dass**
das Prozessormodul ausgebildet ist, den zukünftigen Fahrverlauf (41, 43, 44, 45) des Gefährts (20) im Umfang dessen Fahrspur (21,31,32) und/oder dessen Schleppspur (22,33,34) zu prognostizieren und perspektivisch richtig und/oder symbolisch den durch die Kamera aufgenommenen Bilddaten überlagert auf der Anzeigeeinheit darzustellen und in einem ersten Betriebsmodus den zukünftigen Fahrverlauf unter Verwendung des aktuellen Lenkwinkels zu prognostizieren und/oder zu extrapolieren und nur für rektifizierbare Positionen auf der Anzeigeeinheit als einen ersten Fahrverlaufsabschnitt (41) darzustellen.

2. Vorrichtung nach Anspruch 1, **dadurch gekennzeichnet, dass** es sich bei der Kamera (9) um eine omnidirektionale Kamera handelt.

3. Vorrichtung nach einem der vorhergehenden Ansprüche 1 oder 2, **dadurch gekennzeichnet, dass** der oder die Sensoren wenigstens einen Sensor zum Erfassen des Lenkwinkel (7) wenigstens einer lenkbaren Achse (6) des Gefährts (1) und/oder wenigstens einen Sensor zum Erfassen des Knickwinkels (5) zwischen wenigstens zwei Fahrzeugelementen (2,3) umfassen.

4. Vorrichtung nach Anspruch 3, **dadurch gekennzeichnet, dass** der Sensor zur Erfassung des Knickwinkels (5) zwischen wenigstens zwei Fahrzeugelementen ober des Lenkwinkels (7), auf einem umgebungserfassenden Sensor, insbesondere einer Kamera oder einem Radar/Lidar, basiert, und der aktuelle Knickwinkel (5) bzw. Lenkwinkel (7) ausgehend von den damit erfassten Umgebungsdaten geschätzt wird.

5. Vorrichtung nach einem der vorhergehenden Ansprüche, **dadurch gekennzeichnet, dass** der dem Prozessormodul zugeordnete Speicher so ausgelegt ist, dass darin die Geometrien mehrer unterschiedlich möglicher Geometrien bzw. Konstellationen des Gefährts (1) abgelegt sind.

6. Vorrichtung nach einem der vorhergehenden Ansprüche, **dadurch gekennzeichnet, dass** das Prozessormodul eine Einheit zur Erkennung von in den Bilddaten abgebildeten Objekten umfasst.

7. Vorrichtung nach einem der vorhergehenden Ansprüche, **dadurch gekennzeichnet, dass** die Anzeige (10) als Headup-Display ausgestaltet ist.

8. Vorrichtung nach einem der vorhergehenden Ansprüche, **dadurch gekennzeichnet, dass** die Anzeige (10) in einem oder im Bereich eines der Rückspiegel des Gefährts (1) installiert ist.

9. Vorrichtung nach einem der vorhergehenden Ansprüche, **dadurch gekennzeichnet, dass** das Prozessormodul ausgebildet ist, Hinweise (25, 35) auf den rektifizierbaren Zustand des Gefährts für die aktuelle Position und/oder für die prognostizierte Position auf der Anzeigeeinheit (10) darzustellen.

10. Vorrichtung nach einem der vorhergehenden Ansprüche, **dadurch gekennzeichnet, dass** das Prozessormodul ausgebildet ist, den zukünftigen Fahrverlauf (41, 43, 44, 45) unter Berücksichtung und/oder Gewichtung der rektifizierbaren Zustände zu prognostizieren, indem Fahrverläufe, die entlang Trajektorien mit Positionen rektifizierbarer Zustände verlaufen, bei der Prognose bevorzugt werden.

11. Vorrichtung nach einem der vorhergehenden Ansprüche, , **dadurch gekennzeichnet, dass** das Prozessormodul ausgebildet ist, den prognostizierten Fahrverlauf (41, 43, 44, 45) des Gefährts zumindest abschnittsweise auf Trajektorien zu legen, die durch Punkte rektifizierbarer Zustände des Gefährts gebildet sind.

12. Vorrichtung nach einem der vorhergehenden Ansprüche, **dadurch gekennzeichnet, dass** das Prozessormodul ausgebildet ist, in einem zweiten Betriebsmodus dem ersten Fahrverlaufsabschnitt (41) mindestens einen zweiten Fahrverlaufsabschnitt (43, 44, 45) anzuschließen, wobei der zweite Fahrverlaufsabschnitt (43, 44, 45) an einem Abweichpunkt (46) angeschlossen wird, an dem mit dem aktuellen Lenkwinkel (5) keine rektifizierbare Position zu prognostizieren ist und wobei der zweite Fahrverlaufsabschnitt (43, 44, 45) unter Verwendung eines optimierten Lenkwinkels prognostiziert und/oder auf der Anzeigeeinheit (10) dargestellt wird, wobei der optimierte Lenkwinkel eine mögliche Spur betrifft, die der Spur mit dem ursprünglichen Lenkwinkel am nächsten kommt, jedoch auf einer Trajektorie mit Positionen rektifizierbarer Zustände verläuft.

13. Vorrichtung nach einem der Ansprüche 12, dass eine Schar von zweiten Fahrverlaufsabschnitten (43, 44, 45), insbesondere unter Verwendung von mehreren optimierten Lenkwinkel prognostiziert und/oder auf der Anzeigeeinheit dargestellt wird.

14. Vorrichtung nach einem der Ansprüche 12 bis 13, **dadurch gekennzeichnet, dass** der oder die zweiten Fahrverlaufsabschnitte (43, 44, 45) Trajektorien zum Geraderichten des Gefährts umfassen.

15. Verfahren zur Fahrerunterstützung beim Rangieren eines Fahrzeuges bzw. Fahrzeuggespanns (1), bei welchem dieses Gefährt aus mehreren gegeneinander knickbaren Fahrzeugelementen (2,3) besteht, unter Verwendung einer Vorrichtung nach einem der vorhergehenden Ansprüche,
wobei mit wenigstens einer Kamera (9) Bilddaten von der rückwärtigen Umgebung des Gefährts (1) erfasst werden, wobei diese Bilddaten gemeinsam mit den Daten über den Lenkwinkel (7) wenigstens einer lenkbaren Achse (6) des Gefährts (1), sowie über den Knickwinkel (5) wenigstens zwischen zwei Fahrzeugelementen (2,3) einem Prozessormodul zugeführt werden, welches anhand der Daten über Lenk- und Knickwinkel (5,7) in Kenntnis wenigstens der Geometrie des Gefährts (1), dessen künftigen Fahrverlauf im Umfang dessen Fahrspur (21,31,32) und/oder dessen Schleppspur (22,33,34) prognostiziert und perspektivisch richtig, symbolisch den durch die Kamera aufgenommenen Bilddaten überlagert, und wobei die so bearbeiteten Bilddaten auf einer Anzeige (10) dem Fahrer des Gefährts (1) angezeigt werden,
wobei
rektifizierbare Zustände des Gefährts für eine aktuelle Position und/oder für mindestens eine prognostizierte Position des Gefährts bestimmt werden, wobei der rektifizierbare Zustand des Gefährts als ein Zustand definiert ist, aus dem das Gefährt innerhalb einer vorgegebenen Fahrstrecke während der Rückwärtsfahrt vorzugsweise von weniger als vier, drei oder zwei Fahrzeuglängen gerade ausgerichtet werden kann.

16. Verfahren nach Anspruch 15, **dadurch gekennzeichnet, dass** alle Lenk- und/oder Knickwinkel (5,7) des Gefährts (1) erfasst werden.

17. Verfahren nach einem der Ansprüche 15 bis 16, **dadurch gekennzeichnet, dass** im Rahmen der Überlagerung der durch die Kamera aufgenommenen Bilddaten die Fahrspuren (21, 31, 32) aller Räder des Gefährts angezeigt werden.

18. Verfahren nach einem der Ansprüche 15 bis 17, **dadurch gekennzeichnet, dass** im Rahmen der Überlagerung der durch die Kamera (9) aufgenommenen Bilddaten nur die Fahrspuren (21, 31, 32) derjenigen Räder angezeigt werden, welche senkrecht zum aktuell prognostizierten Fahrverlauf am weitesten beabstandet sind.

19. Verfahren nach einem der Ansprüche 15 bis 19, **dadurch gekennzeichnet, dass** die Anzeige von Fahrspur (21, 31 ,32) und/oder Schleppspur 22,33,39) gestuft in unterschiedlichen Gestaltungsvarianten erfolgt.

20. Verfahren nach einem der Ansprüche 15 bis 19, **dadurch gekennzeichnet, dass** in den Bilddaten Teile des Gefährts (1) abgebildet werden.

21. Verfahren nach einem der Ansprüche 15 bis 20, **dadurch gekennzeichnet, dass** in den von der Kamera (9) erfassten Bilddaten Objekte erkannt und sodann bei deren Anzeige hervorgehoben werden.

22. Verfahren nach Anspruch 21, **dadurch gekennzeichnet, dass** die Hervorhebung durch symbolische Überlagerung der ein Objekt repräsentierenden Bilddaten erfolgt.

23. Verfahren nach einem der Ansprüche 15 bis 22, **dadurch gekennzeichnet, dass** einer der Betriebsmodi gemäß der Ansprüche 1 bis 15 durchgeführt wird.

## Claims

1. Device for aiding drivers when manoeuvring a vehicle or a vehicle combination (1) when reversing, the combination comprising several vehicle elements (2, 3) capable of articulation relative to one another, comprising a camera (9) for gathering image data from the rear surroundings of the vehicle combination (1), comprising one or more sensors for detecting the arrangement of the vehicle combination and/or of the vehicle elements, comprising a processor module connected to the camera and the sensor(s), the processor module including at least one unit for image data processing and at least one memory storing dimensions of the geometry, in particular of the circumferential geometry, of the vehicle combination (1), and further comprising a display unit (10) for the display of the image data edited in the processor module,
wherein the processor module is provided with an identification module for the identification of a rectifiable state of the vehicle combination for a current position and/or for at least one prognosticated position of the vehicle combination, the rectifiable state of the vehicle combination being defined as state from which the vehicle combination can be brought into a straight position while reversing within a presettable distance of preferably less than four, three or two vehicle combination lengths,
**characterised in that**
the processor module is designed to prognosticate the future travelling path (41, 43, 44, 45) of the vehicle (20) within the compass of its driving track (21, 31, 32) and/or its lowing track (22, 33, 34), to display it on the display unit in the correct perspective and/or symbolically by superimposing it on the image data recorded by the camera and to prognosticate and/or extrapolate in a first operating mode the future travelling path using the current steering angle and to display it on the display unit as a first travelling path section (41) for rectifiable positions only.

2. Device according to claim 1, **characterised in that** the camera (9) is an omnidirectional camera.

3. Device according to any of the preceding claims 1 or 2, **characterised in that** the sensor(s) include(s) at least one sensor for detecting the steering angle (7) of at least one steered axle (6) of the vehicle combination (1) and/or at least one sensor for detecting the articulation angle (5) between at least two vehicle elements (2, 3).

4. Device according to claim 3, **characterised in that** the sensor for detecting the articulation angle (5) between at least two vehicle elements or the steering angle (7) is based on an environment-scanning sensor, in particular on a radar/lidar, and **in that** the current articulation angle (5) or steering angle (7) is estimated on the basis of the environmental data detected.

5. Device according to any of the preceding claims, **characterised in that** the memory assigned to the processor module is designed such that the geometries of several possible different configurations or constellations of the vehicle combination (1) are stored therein.

6. Device according to any of the preceding claims, **characterised in that** the processor module includes a unit for the detection of objects mapped in the image data.

7. Device according to any of the receding claims, **characterised in that** the display (10) is designed as a head-up display

8. Device according to any of tha preceding claims, **characterised in that** the display (10) is installed in or in the region of one of the rear-view mirrors of the vehicle combination (1).

9. Device according to any of the preceding claims, **characterised in that** the processor module is designed to show on the display unit (10) prompts (25, 35) concerning the rectifiable state of the vehicle combination for the current position and/or for the prognosticated position.

10. Device according to any of the preceding claims, **characterised in that** the processor module is designed to prognosticate the future travelling path (41, 43, 44, 45) while taking account of and/or weighting the rectifiable states by giving preference to travelling paths running along trajectories with positions of rectifiable states in prognostication.

11. Device according to any of the preceding claims, **characterised in that** the processor module is designed to lay at least sections of the prognosticated travelling path (41, 43, 44, 45) of the vehicle combination on trajectories formed by points of rectifiable states of the vehicle combination.

12. Device according to any of the preceding claims, **characterised in that** the processor module is designed to join to the first travelling path section (41) in a second operating mode at least one second travelling path section (43, 44, 45), wherein the second travelling path section (43, 44, 45) is joined at a deviation point (46) where no rectifiable position can be prognosticated at the current steering angle (6), and wherein the second travelling path section (43, 44, 45) is prognosticated using an optimised steering angle and/or is displayed on the display unit (10), the optimised steering angle relating to a possible track which most closely approximates the track with the original steering angle but runs on a trajectory with positions of rectifiable states.

13. Device according to any of claims 1 to 12, **characterised in that** a number of second traveling path sections (43, 44, 45) is prognosticated, particularly on the basis of several optimised steering angles, and/or displayed on the display unit

14. Device according two claim 12 or 13, **characterised in that** the second travelling path sectlors(s) (43, 44, 45) include(s) trajectories for straightening the vehicle combination.

15. Method for aiding drivers when manoeuvring a vehicle or a vehicle combination (1), the combination comprising several vehicle elements (2, 3) capable of articulation relative to one another, involving the use of a device according to any of the preceding claims, wherein image data of the rear surroundings of the vehicle combination (1) are gathered by at least one camera (9), wherein these image data, together with data on the steering angle (7) of at least one steered axle (6) of the vehicle combination (1) and on the articulation angle (5) between at least two vehicle elements (2, 3), are fed to a processor module which, using the data on the steering angle and the articulation angles (5, 7) and knowing at least the geometry of the vehicle combination (1), prognosticates the future travelling path thereof within the compass of its driving track (21, 31, 32) and/or its towing track (22, 33, 34) and superimposes it in the correct perspective symbolically on the image data recorded by the camera, and wherein the image data edited in this way are indicated to the driver of the vehicle combination (1) on a display (10),
wherein
rectifiable states of the vehicle combination are determined for a current position and/or for at least one prognosticated position of the vehicle combination, the rectifiable state of the vehicle combination being defined as a state from which the vehicle combination can be brought into a straight position while reversing within a presettable distance of preferably less than four, three or two vehicle lengths.

16. Method according to claim 15, **characterised in that** all steering and/or articulation angles (5, 7) of the vehicle combination (1) are covered.

17. Method according to claim 16 or 18, **characterised in that** the tracks (21, 31, 32) of all four wheels of the vehicle combination are displayed in the process of superimposing the image data recorded by the camera.

18. Method according to any of claims 15 to 17, **characterised in that** only the tracks (21, 31, 32) of those wheels with the greatest distance at right angles from the currently prognosticated travelling path are displayed in the process of superimposing the image data recorded by the camera (9).

19. Method according to any of claims 15 to 18, **characterised in that** the display of the driving track (21, 31, 32) and/or the towing track (22, 33, 34) is graduated in different design variants.

20. Method according to any of claims 15 to 19, **characterised in that** parts of the vehicle combination (1) are mapped in the image data.

21. Method according to any of claims 15 to 20, **characterised in that** objects are identified in the image data recorded by the camera (9) and are highlighted in their display.

22. Method according to claim 21, **characterized in that** the highlighting process is based on symbolic superimposition of the image data representing an object.

23. Method according to any of claims 15 to 22, **characterised in that** one of the operating modes according to any of claims 1 to 15 is executed.

## Revendications

1. Dispositif d'aide pour se garer pour des conducteurs de véhicules ou de trains routiers (1), constitué de véhicules (2, 3) articulés les uns par rapport aux autres lors d'une manoeuvre de recul, comprenant une camera (9) pour capter des données d'images venant des environs à l'arrière du véhicule (1), comprenant un ou plusieurs capteurs pour là perception de la disposition instantanée du véhicule et/ou des véhicules, comprenant un module de processeur, qui est lié avec la camera (9), ainsi qu'avec le ou les capteurs, ledit module de processeur se compose d'au moins une mémoire, comportant les écarts géométriques, en particulier des dimensions géométriques du véhicule (1), est comprenant également une unité d'affichage (10) pour l'affichage des données d'images traitées dans le module de processeur,
ledit module de processeur présentant un module de détermination pour la détermination de la position rectifiable du véhicule pour une position actuelle et ou d'au moins une position pronostiquée du véhicule, ladite position rectifiable du véhicule étant définie comme un état, depuis lequel le véhicule peut être aligné à l'intérieur d'un déplacement défini lors d'une manoeuvre de recul, de préférence de moins de quatre, trois ou deux longueurs de véhicule, **caractérisé en ce que** le module de processeur est conçu de manière à pronostiquer le parcours ultérieur (41, 43, 44, 45) du véhicule (20) en fonction de sa trace (21, 31, 32) et/ou de la trace de son véhicule tracté (22, 33, 34) et à afficher les données d'images captées par la caméra correctement superposées en 3 dimensions et/ou symbolisées sur l'unité d'affichage et à pronostiquer et/ou à extrapoler dans un premier mode de fonctionnement le parcours ultérieur en utilisant l'angle de direction actuel et de ne l'afficher que pour des positions rectifiables sur l'unité d'affichage comme une première séquence de parcours (41).

2. Dispositif selon la revendication 1, **caractérise en ce que** la caméra (9) est une caméra omnidirectionnelle.

3. Dispositif selon l'une quelconque des revendications 1 ou 2, **caractérisé en ce que** le ou les capteurs comprennent au moins un capteur pour la perception de l'angle de direction (7) d'au moins une axe dirigeable (6) du véhicule (1) et/ou au moins un capteur pour la perception de l'angle de flèche (5) entre au moins deux véhicules (2,3)

4. Dispositif selon la revendication 3, **caractérisé en ce que** le capteur pour la perception de l'angle de flèche (5) situé entre au moins deux véhicules ou pour la perception de l'angle de direction (7) s'appuie sur un capteur percevant l'environnement, en particulier sur une camera ou un radar/LIDAR, et **en ce que** l'angle de flèche actuel (5) au l'angle de direction (7) est estimé à partir des données perçues de l'environnement.

5. Dispositif selon l'une quelconque des revendications précédentes, **caractérisé en ce que** la mémoire assignée au module de processeur est conçue de la manière, à ce que les données géométriques de plusieurs géométries ou configurations différentes possibles du véhicule (1) sont archivées à l'intérieure.

6. Dispositif selon l'une quelconque des revendications précédentes, **caractérise en ce que** le module du processeur comprend une unité pour la détection des objets affichés dans les données d'images.

7. Dispositif selon l'une quelconque des revendications précédentes, **caractérisé en ce que** l'affichage (10) est effectué par un affichage tête haute.

8. Dispositif selon l'une quelconque des revendications précédentes, **caractérisé en ce que** l'affichage (10) est installé dans une ou la zone de l'un des rétroviseurs du véhicule (1).

9. Dispositif selon l'une quelconque des revendications précédentes **caractérisé en ce que** le module de processeur est configuré de manière à afficher des points de repère (25, 35) sur l'état rectifiable du véhicule pour la position actuelle et/ou pour la position pronostiquée sur l'unité d'affichage (10).

10. Dispositif selon l'une quelconque des revendications précédentes **caractérisé en ce que** le module de processeur est conçu de manière à pronostiquer le parcours ultérieur (41, 43, 44, 45) compte tenue des états rectifiables et/ou leur priorité, en favorisant lors du pronostique des parcours qui s'inscrivent dans les trajectoires des états rectifiables à l'aide des positions.

11. Dispositif selon l'une quelconque des revendications précédentes, **caractérisé en ce que** le module du processeur est configuré de manière à inscrire le parcours pronostiqué (41, 43, 44, 45) du véhicule au moins en étapes sur des trajectoires, qui sont composées par des points des états rectifiables du véhicule.

12. Dispositif selon l'une quelconque des revendications précédentes, **caractérisé en ce que** le module de processeur est conçu de manière à ajouter dans un deuxième mode de fonctionnement à la première séquence de parcours (41) au moins une deuxième séquence de parcours (43, 44, 45), ladite deuxième séquence de parcours (43, 44, 45) est liée à un point d'écart (46), sur lequel aucune position rectifiable ne peut être pronostiquée à l'aide de l'angle de direction (5) actuel et la deuxième séquence de parcours (43, 44, 45) étant pronostiquée en utilisant un angle de direction optimisé et /ou est affichée sur l'unité d'affichage (10), ledit angle de direction optimisé étant en rapport avec une trace possible, qui se rapproche le plus la trace avec l'angle de direction initial, mais qui s'inscrit sur une trajectoire avec des états des positions rectifiables.

13. Dispositif selon la revendication 12, **caractérisé en ce que** une multitude de deuxièmes séquence du parcours (43, 44, 45) en particulier en utilisant plusieurs angles de direction optimisés sont pronostiquées et/ou affichés sur l'unité d'affichage.

14. Dispositif selon l'une quelconque des revendications 12 à 13, **caractérisé en ce que** la ou les deuxièmes séquences de parcours (43, 49, 45) comprennent des trajectoires pour l'alignement du véhicule.

15. Procédé pour se garer pour des conducteurs de véhicules ou de trains routiers (1), durant lequel ce véhicule est constitué de véhicules (2, 3) articulés les uns par rapport aux autres, en utilisant un dispositif selon l'une quelconque des revendications précédentes, des données d'images de la zone à l'arrière du véhicule (1) étant captées avec au moins une camera (9), lesdites données d'images envoyées ensemble avec les données de l'angle de direction (7) d'au moins une axe dirigeable (6) du véhicule (1), ainsi que les données de l'angle de flèche (5) entre au moins deux véhicule (2, 3) vers un module de processeur, qui pronostique à l'aide des données de l'angle de direction et de flèche (5, 7) et connaissant au moins les données géométriques du véhicule (1) son parcours ultérieur en fonction de sa trace (21, 31, 32) et/ou de la trace de son véhicule tracté et superpose les données d'images captées par la camera correctement en trois dimensions, symbolisées, et lesdites données d'images traitées ainsi étant affichées sur un affichage (10) pour la conducteur du véhicule (1),
les états rectifiables du véhicule étant déterminés pour une position actuelle et/ou pour au moins une position pronostiquée, l'état rectifiable du véhicule étant défini comme un état, depuis lequel le véhicule peut être aligné à l'intérieur d'un déplacement donné lors d'un manoeuvre de recul, de préférence de moins de quatre, trois ou deux longueurs du véhicule.

16. Dispositif selon la revendication 15, **caractérisé en ce que** tous les angles de direction et/ou de flèche (5, 7) du véhicule (1) sont captés.

17. Procédé selon l'une quelconque des revendications 15 à 16, **caractérisé en ce que** dans le cadre de la superposition des données d'images captées par la camera, les traces (21, 31, 32) de tous les roues du véhicule sont affichées.

18. Procédé selon l'une quelconque des revendications 15 à 17, **caractérisé en ce que** dans le cadre de la superposition des données d'images captées par la camera (9) seulement les pistes (21, 31, 32) de ces roues sont affichées, qui se trouvent verticalement les plus éloignées par rapport au parcours actuel pronostiqué.

19. Procédé selon l'une quelconque des revendications 15 à 19, **caractérisé en ce que** l'affichage de la trace (21, 31, 32) et ou de la trace d'un véhicule tracté (22, 33, 34) s'effectue de manière échelonnée dans différentes variantes de présentation.

20. Procédé selon l'une quelconque des revendications 15 à 19, **caractérisé en ce que** des parties du véhicule (1) sont affichées dans les données d'images.

21. Procédé selon l'une quelconque des revendications 15 à 20, **caractérisé en ce que** des objets sont identifies dans les données d'images captées par la camera (9) et ensuite mis en relief lors de leur affichage.

22. Procédé selon la revendication 21, **caractérisé en ce que** la mise en relief des données d'images représentant un objet s'effectue par une superposition symbolisée.

23. Procédé selon l'une quelconque des revendications 15 à 22, **caractérisé en ce que** l'un des modes de fonctionnement est effectué selon les revendications 1 à 15.
